# EUROPEAN PATENT APPLICATION

(11) **EP 0 813 040 A2**
(43) Date of publication of application: **17.12.1997**
(21) Application number: 97303945.6
(22) Date of filing: 06.06.1997
(51) Int. Cl.: G01C 11/06

(54) **Precision spatial mapping with combined video and infrared signals**

(30) Priority: 14.06.1996 US 665155
(71) Applicant: XEROX CORPORATION, Rochester New York 14644 (US)
(72) Inventor: Greene, Daniel H., Sunnyvale, California 94087 (US); Want, Roy, Los Altos, California 94024 (US); Newman, William M., Cambridge, Cambs (GB)
(74) Representative: Reynolds, Julian David

(57) **Abstract**

A system (10) for virtually modeling a physical system having immovable and movable objects includes at least two video cameras (20-24, 62), each of the video cameras being configured to provide a sequence of images. An image processing system (60) extracts modulated infrared signals from the sequence of images to identify the spatial location of objects (55, 70, 75) using information obtained from both visible light images and infrared images. With this information, a virtual reality modeling system constructs a virtual reality model. Infrared pointers that direct modulated infrared spots having a unique identification against surfaces can be used for surveying, while active (50, 57) or passive (51) infrared tags can track movable objects for virtual reality modeling.

## Description

The present invention relates to a system using infrared signaling devices to map areas and track objects. More specifically, the present invention relates to the use of CCD video cameras for detecting and identifying multiple colocated tagged regions or objects with reflective, active, or passive infrared signals, and determining spatial location of the identified region or object after image analysis of video frames generated by the CCD video camera.

The graphics and processing capabilities of available personal computers and workstations now permits display of relatively sophisticated virtual reality constructions. Currently, the majority of virtual reality constructions are probably imaginary constructs, implemented as games, simulations, or recreational online meeting places, and designed using virtual reality modeling languages or the equivalent. Although these constructs may be based on a physical model (e.g. rooms in a buildings), they do not typically employ sensor systems to monitor changes in the physical model, and accordingly change the virtual reality construct to match the physical model.

One possible reason for the limited availability of virtual reality constructs that accurately track physical models is the cost associated with mapping and surveying the physical model. If the physical system is well defined and compact, a limited number of sensors or several tracking cameras may suffice to track the state of the physical system. Such limited physical systems may include, for example, the notorious internet accessible coffee makers or soda dispensing machines having a physical state that can be monitored and displayed. Unfortunately, the sensor or camera systems used to track such simple physical systems do not scale very well to more useful virtual reality constructs. For example, modeling a building with sufficient accuracy to track opening and closing of doors or windows, movement of objects or people, and placement of movable furniture in the building requires essentially continuous input of large amounts of 3-dimensional spatial information that is not readily available with current sensing techniques.

The problem of dealing with the vast amounts of sensor data needed to provide an accurate virtual reality model of a building or other complex collection of physical objects can be reduced by conceptually dividing the collection of physical objects into immovable objects and movable objects. In a building, immovable objects would include the building's floors, walls, ceilings, overhead lights or other permanent fixtures that are infrequently or never moved. Immovable objects need only be mapped once with high precision, and require only limited long term sensor tracking, which can be optionally updated on a daily, weekly, or monthly time scale to ensure that movement of cubicles, partitions, etc. has not occurred. Although the initial investment in mapping immovable objects for translation to a virtual reality model is substantial, maintenance of an accurate virtual reality model for immovable objects is not overly difficult.

In contrast, one of the most difficult problems associated with virtual reality modeling is that of tracking readily movable objects. Trackable objects may include books, tools, doors, windows, portable computers, or even people. Doors and windows can be opened or closed, books can be misplaced or incorrectly filed on shelves, portable computers can be moved to other rooms, and tools can be lost in a jumble of material in a corner of a room. One possible solution to this problem relies on tagging an object with a low power transmitter capable of emitting an identification signal. With such a system, the presence or absence of a particular tagged object can be ascertained. Unfortunately, the spatial resolution of generally available identification systems is quite low, with localization only on the order of several meters (i.e. room sized) being possible. Further, such systems can generally only track a limited number of objects, may only be able to provide serial identification and localization (instead of substantially parallel identification and localization), and often require proximity of the detector (for example, bar code reading systems or implanted identification devices for tagging pets or laboratory animals). While sophisticated or custom designed systems that support both object identification and precision localization are available, these solutions are generally quite expensive or have a limited range of applications.

What is needed is an inexpensive system mapping spatial regions with high precision. Once mapped, a spatial region should support identification and tracking of tagged objects without requiring proximity of a detector. The system should support identification of large numbers of mapping points, tagged objects, or regions, and have a spatial localization resolution on the order of centimeters or millimeters, rather than meters, to permit identification and accurate spatial localization within less than room size regions. Such a system would require only inexpensive components such as CCD (charge couple device) video cameras to act a detectors, inexpensive passive or active infrared devices that function as surveying points or identification tags, and an image processing computer for determining identification and spatial localization of a tagged object or region. Ideally, such a system would also have the ability to track and spatially localize slow moving objects (e.g. a tagged person or electronic device held by a person).

The present invention provides a system for virtually modeling a physical system having immovable and movable objects, comprising: at least two video cameras, each of the video cameras being configured to provide a sequence of images, an image processing system configured to extract modulated infrared signals from the sequence of images and identify the spatial location of objects, and a virtual reality modeling system for constructing a virtual reality model using identified object spatial location information.

The invention further provides a system according to claims 4 and 7 of the appended claims.

In one preferred embodiment the present invention provides a system for precisely locating infrared tags useful for mapping and surveying purposes. At least two conventional and widely commercially available CCD video cameras having overlapping field of views are used. The video cameras are capable of detecting both visible light and infrared, and are further configured to provide a sequence of images at predefined frame rates. One or more infrared identification tags for providing modulated infrared signals are positioned in a room or area within the overlapping field of view of the video cameras, and an image processing system is used to extract the modulated infrared signals from the sequence of images and identify the spatial location of the infrared tag using information obtained from both visible light images and infrared images. In certain preferred embodiments, reflective tagging systems using laser pointers to direct uniquely identifiable light spots against predefined regions or areas of a room are best suited for surveying.

Various possible infrared signaling modes of operation are contemplated. In one preferred embodiment infrared identification tags attached to a particular region or object intermittently emit infrared detection signals at a rate less than the frame rate of the video camera to establish spatial location. The pattern of infrared blinking seen through comparison of multiple frames of the video cameras can be used to positively identify infrared tags and transfer identification information or other data. Advantageously, because multiple infrared identification tags are spatially separated within the same frame of the video camera, identification and tracking of multiple tags in parallel can be achieved. In practice, data acquisition from a room can utilize large numbers of identifying infrared tags attached to objects. In addition to objects, infrared tags can be deployed to describe particular positions, locations, or areas in a room, or can be used as remote sensors for providing telemetry and location dependent data (e.g. thermometers or motion detectors).

In certain embodiments, multiple tags attached to a movable object can be used to determine and track orientation, as well as location, of the objects. For example, if an object is rotated, use of two or more attached tags could allow determination of the angle of rotation. Use of multiple tags also alleviates problems associated with obscuration of an object, and increases accuracy of position determination. Further, multiple identification tags can be used to increase rate of data transfer.

Alternative embodiments, including the use of visible light instead of infrared, or variant position and data encoding schemes for infrared signals, are also contemplated within the scope of the present invention. For example, it is possible to use a separate infrared communication channel receiver for reception of infrared identification signals that are emitted substantially time coincident with infrared detection signals used to establish spatial location of the infrared tag. Using time coincidence methods, it is possible to transfer data at much higher rates than the relatively slow data transfer rates possible using multiple frame comparisons from the video cameras alone. In addition, to reduce power requirements it is possible to use passive infrared reflectors as tags (with a separate, room mounted infrared flasher providing infrared light on demand), or to use infrared identification tags that are activated only in response to an identification request.

In a broad embodiment, the present invention is a system for precisely locating identification tags that includes at least two video cameras configured to provide a sequence of images at a first frame rate. An identification tag for providing a series of spaced apart signals at a second frame rate defined to be less than the first frame rate, with the signals being perceptible by the video camera. An image processing system is configured to extract the three dimensional spatial location of the identification tags from the sequence of images, and a data transfer system is used for transferring data from the identification tag. This data is correlated with the three dimensional spatial location of the identification tag as determined by the image processing system.

Advantageously, the present invention uses relatively inexpensive and commonly available components such as infrared transmitters and CCD video cameras to provide highly precise spatial localization of identification tags. Suitable high quality CCD video cameras are widely employed for consumer security systems. Because of the economies of scale, such CCD video cameras are quite inexpensive, making them ideal for this application.

Since infrared signals are invisible to the human eye, yet easily visible to CCD video cameras, the infrared signaling system is essentially invisible to users, while still being easy for automated systems to locate and interpret without elaborate image processing techniques. The present invention can be quickly implemented after computer network connected video cameras are installed, and does not require complex setup or initialization. Using a limited number of inexpensive video cameras, the present invention allows for tracking large numbers of infrared tags capable of conveying limited amounts of object data, with density bandwidth problems typical of cellular mobile communications being substantially avoided.

Additional functions, objects, advantages, and features of the present invention will become apparent from consideration of the following description and drawings of preferred embodiments, in which:
Figure 1 is a schematic outline of system for precisely locating infrared identification tags using a CCD video camera;
Figure 2 is an expanded view of a search region illustrated in Figure 1, with books having single or multiple infrared tags being illustrated;
Figure 3 is a graph illustrating infrared pulse intensity versus time, with periodic pulses to establish position followed by data pulses to transfer information being shown;
Figure 4 illustrates selected image processed frames of two video cameras showing blinking infrared data signals capable of being correlated to determine spatial position;
Figure 5 is an alternative pulse scheme using two substantially time coincident communication channels to determine position and transfer data;
Figure 6 illustrates selected image processed frames of two video cameras operating in accordance with the alternative pulse scheme of Figure 5, with blinking infrared data signals capable of being correlated to determine spatial position on a first communication channel, and data provided on a substantially time coincident second communication channel; and
Figure 7 schematically illustrates construction of an active infrared tag.

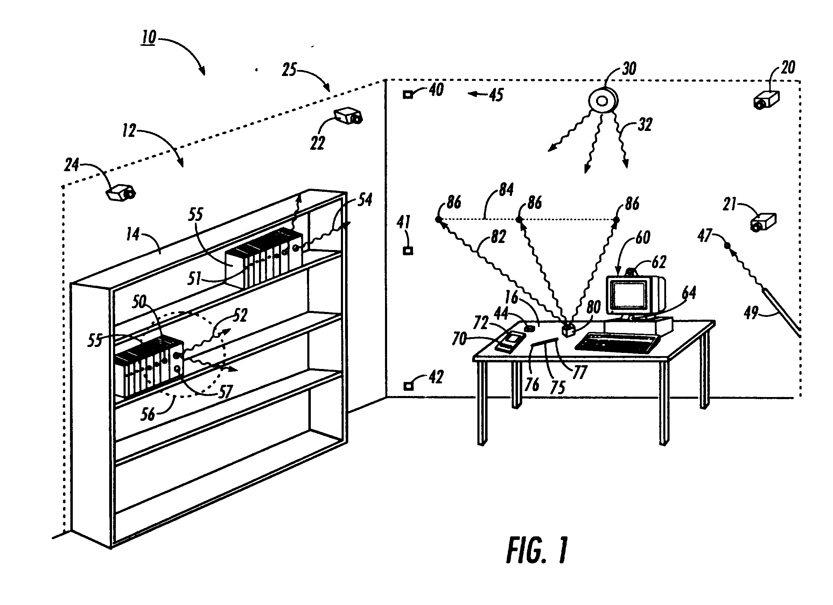

As illustrated in Figure 1, a system 10 for precisely locating infrared signal sources 25 (infrared tags) includes multiple CCD video cameras 25 positioned in room 12. These video cameras 25 may have a fixed view, such as CCD video cameras 20, 21, 22, and 62, or they may have a movable view such as provided by movable CCD video camera 24. Infrared signal sources 45 suitable for spatial localization, identification and data transference can be positioned on static or essentially immovable objects such as walls (tags 40, 41, and 42), or desks (tag 44). Infrared signal sources 45 can also be positioned on readily movable objects such as books 55 (tags 50 and 51), a portable electronic device 70 (tag 72), or even writing instruments such as pen 75 (tags 76 and 77). Image processing for spatial localization and data utilizes a computer system, in this example illustrated by a computer system 60. The computer system 60 can of course be located outside room 12, and there is no special requirement for any local computer process control. The computer system is connected by wireless or wired links to video cameras 25, and may be stand-alone or connected to a computer network for distributing image processing duties and allowing for high speed data transfer. In the illustrated embodiment of Figure 1, the computer system 60 has sufficient image processing capabilities and data storage to construct a virtual reality model of the room 12, with all objects tagged with an infrared signal source being trackable.

The present system 10 advantageously utilizes emitted infrared signals that are invisible to the human eye yet easily visible to CCD cameras 25. After suitable image processing, the emitted infrared signals from multiple infrared tags provide three dimensional spatial localization for each of those multiple infrared tags. The emitted infrared signals are typically intermittent point source flashes of infrared light (infrared blinks) that appear, along with the visual light image, on frames of CCD video cameras. Since the cameras 25 typically provide between about 10 to 30 frames per second of image data, the blink rate is selected to be less than about 5 to 15 blinks per second to ensure capture of infrared images without aliasing problems. Subtractive image processing between adjacent image frames or other suitable image processing technique is used to enhance and separate the infrared signal from the visual background, allowing the two dimensional spatial pattern of infrared blinks in each image processed frame to be determined. Advantageously, the image processing techniques required to enhance and differentiate infrared point sources in a predominantly visible light image for operation of the present system can be relatively unsophisticated, and do not require elaborate image understanding algorithms.

After two dimensional detection of infrared signal sources is completed, the frames from multiple cameras 25 can be spatially multiplexed using conventional image processing techniques to derive a three dimensional spatial localization of each infrared signal source in room 12. To maximize coverage and ensure three dimensional localization, cameras 25 are arranged so that some combination of at least two cameras have an overlapping field of view on every part of room 12. Each camera 25 can be calibrated to allow for spatial localization through the use of reference objects or camera platform control. For example, a fixed camera 20 having a fixed focal length is calibrated to allow for computation of the angle of two rays entering its lens based on location of two spots in its image. As will be appreciated by those skilled in the art, this angle can be computed from a published focal length of the lens. If necessary, limited experiments can be undertaken to determine an exact mapping that compensates for differing focal lengths and lens distortions. Calibration continues by providing appropriate infrared signal sources at a known distance from a positioned camera that are used as permanent or semi-permanent reference sources for allowing computation of ray angles. Typically, these reference sources are located at junctions of a room (for example, tags 40 and 42 can be used). A new object (such as, for example, infrared tag 41) can be located provided that at least one camera can provide an image of the new object and two reference sources, while a second camera can image the new object and at least one reference source. With additional infrared reference sources detectable by multiple cameras, it is even possible to extend the method so that camera location with respect to the reference sources need not initially be known.

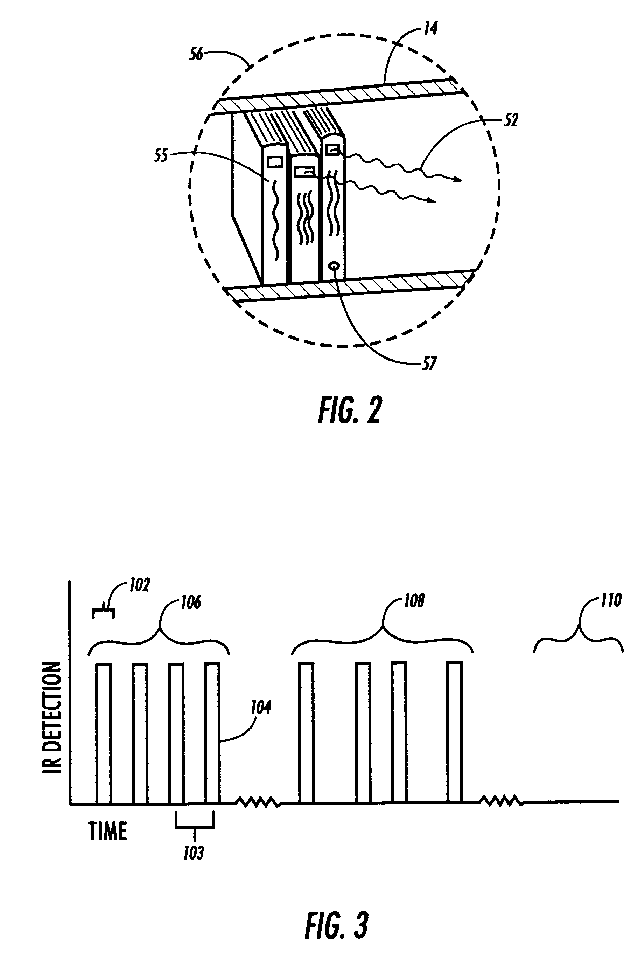

A wide variety of infrared signal sources 45 can be used for camera calibration, spatial localization, identification, and data transfer. For purposes of the present invention, the infrared signal sources 45 can be conceptually divided into reflective tagging systems that transiently mark a region or object with light spots 47, active infrared tags that internally generate infrared light 52 (e.g., infrared tags 50 or infrared data transmitter 57 for identification of books 55 as seen in Figures 1 and 2), or passive infrared tags 51 that controllably reflect incident infrared light 54 in response to incident infrared light 32 provided by an infrared light source 30.

Reflective tagging systems use laser pointers (e.g. pointer 49 of Figure 1, held by a user positioned outside of the Figure) to direct light spots 47 against predefined regions or areas of a room. Typically, infrared lasers are used, although visible light lasers can be used in conjunction to provide pointing assistance to a user. Visible light lasers can even be used alone, at the cost of increased image proccessing requirements to distinguish the visible light signal from the visible background.

In operation, a laser pointer 49 can be utilized for preliminary mapping or surveying operations. The laser pointer 49 is pointed at a particular spot on a wall or object, and a user pulls a trigger to modulate the directed infrared light. Reflected light from the light spot 47 is detected by cameras 25, and used as a one-time identification point. Each pull of a trigger generates a new light modulation pattern, to provide a unique address for the identified spatial location. After image processing of the many infrared signal sources, a three dimensional map (of room 12, for example) can be generated by computer 60. In certain embodiments, it is even possible to use coordinating software to direct a user to point to certain key portions of room 12. For example, a user can be directed to point the laser pointer 49 to each corner of the room, pulling a trigger to transiently provide a unique modulated infrared signal source at each room corner. Using only the room corner information, and relying one the assumption that the room has rectangular dimensions, it is possible to determine the 3-dimensional size of room 12, or any other room of interest. As another example, if a whiteboard or other temporary object that is relatively immovable is brought into a room, a user could direct the laser pointer against the object to define its position without bothering to attach an active or passive infrared tag. In other applications, the identifying spot can be used to guide movable cameras (e.g. camera 24) to point toward selected regions, objects, or persons (e.g. desk 16).

Infrared laser surveying techniques can also assist in the development of three-dimensional models to aid synthesis of camera views. For example, if remote attendees to a meeting desire to have a customized viewpoint, or need to edit a prerecorded presentation to include camera angles not available in the original presentation, input from multiple cameras can be synthesized to interpolate a novel camera view. In Figure 1, an automated surveying tool 80 positioned on desk 16 is used to sweep an intermittently generated infrared beam 82 along a line 84, or in a regular two dimensional pattern. The surveying tool 80 is similar in construction and function to pointer 49, but has an additional rotating, tilt, or sweep mirror to automatically scan the beam 82 across a wall or other surface. This scanning creates a set of modulated identification spots 86 having detectable identifying reflections that can be used for camera viewpoint synthesis. Alternatively, such identifying spots can be used to guide cameras or other instrument to point toward specified areas, or to scan or patrol an area defined by the scan line 84.

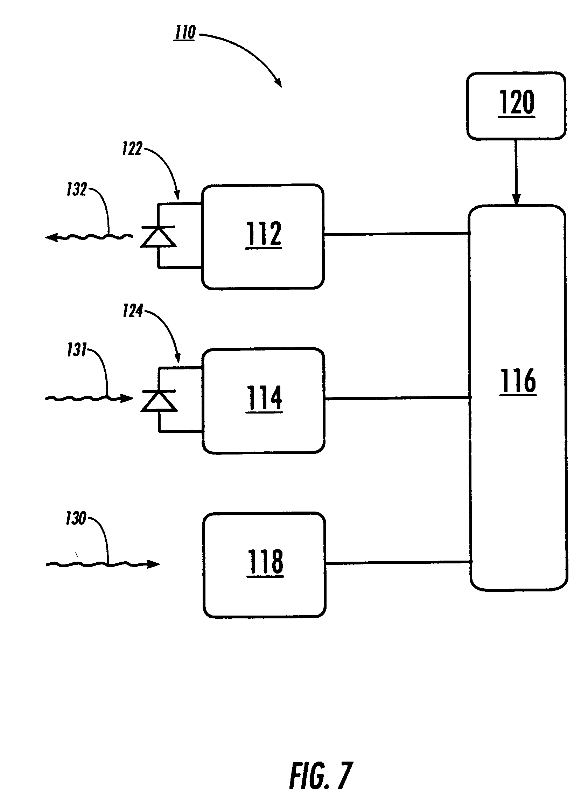

In contrast to reflective tagging, which is best suited for preliminary surveying use, or for transient tracking and identification of regions or objects, both active and passive infrared tags are suited for long term tracking and identification of movable objects. Active infrared tags are generally larger and more expensive than passive infrared tags, requiring a battery or other power source, an infrared emitter such as an infrared LED, and a suitable digital controller. For example, as seen with reference to Figure 7, an active infrared tag 110 can be built by interconnecting four conventional and widely available modules, including a buffer 112 with IR transmitter LED 122, an amplifier 114 with IR detector 124; a microcontroller 116; and a trigger circuit 118. A lithium battery, photoelectric cell, or other long life power source 120 supplies a low voltage power source for driving the modules. In the default state modules 112, 114, and 116 are held in a power-down mode. The fourth module, the trigger circuit 118, is always active but is designed to operate with a very small power-consumption. When the trigger circuit 118 is activated by an external signal 130 such an infrared or optical pulse, the modules 112, 114, and 116 are powered. Addressing signals 131 may be received at module 114, decoded by module 116 and then a response signal 132 sent back using transmitter LED 122 from module 112. The microcontroller module 116 keeps track of time and after some number of milliseconds or the lack of receiver activity, will return itself (module 116), along with modules 112 and 114, to the power-down state. The response signal 132 (infrared pulses) incorporates the identity of the active infrared tag, along with any desired data.

As will be appreciated, many differing types of trigger circuit can be employed. A simple implementation of a trigger circuit include a low-power astable-oscillator with a long and slightly random period (to avoid repeated tag-signal collisions). The trigger circuit could also be designed to be activated by a particularly intense IR flash or it might use another medium such as the reception of a particular radio frequency. In certain contemplated embodiments, the trigger circuit can be designed to render the IR detection/amplification module 114 unnecessary.

Passive infrared tags 51 are an inexpensive alternative to active infrared tags 50. Passive infrared tags 51 controllably reflect infrared light 32 provided by an infrared light source 30. The infrared light source 30 can be continuously, intermittently, or periodically operated as required. In the illustrated embodiment, the passive infrared tags 51 each include an infrared reflecting material covered by an alternately light transmissive or light absorptive shutter. Typically, the shutter is an electrically controlled liquid crystal display (LCD) that normally does not transmit substantial amounts of infrared light. A low power electrical signal is applied to convert the shutter from this infrared non-transmissive state to a substantially transmissive state. By appropriately switching between an infrared light transmissive and non-transmissive state, information can be coded in the pattern of infrared reflections 54 from infrared tags 51 that are detected by cameras 25.

As will be appreciated by those skilled in the art, various activation, data transmission, and timing modifications to both infrared light source 30 and passive infrared tags 51 are possible to enhance reliability of information transfer and conserve power. Using techniques similar to that already discussed in connection with active infrared tags 50, the passive infrared tags 51 can be activated to transmit identification codes and other data in response to an infrared trigger signal. This avoids the need for continuous activation of the LCD shutter mechanism and greatly reduces long term power requirements. As with the active infrared tags 50, multiple passive tags can be simultaneously operated, since the spatial localizing camera system of the present invention can unambiguously distinguish between multiple passive tags 51 transmitting information in response to the same activation signal.

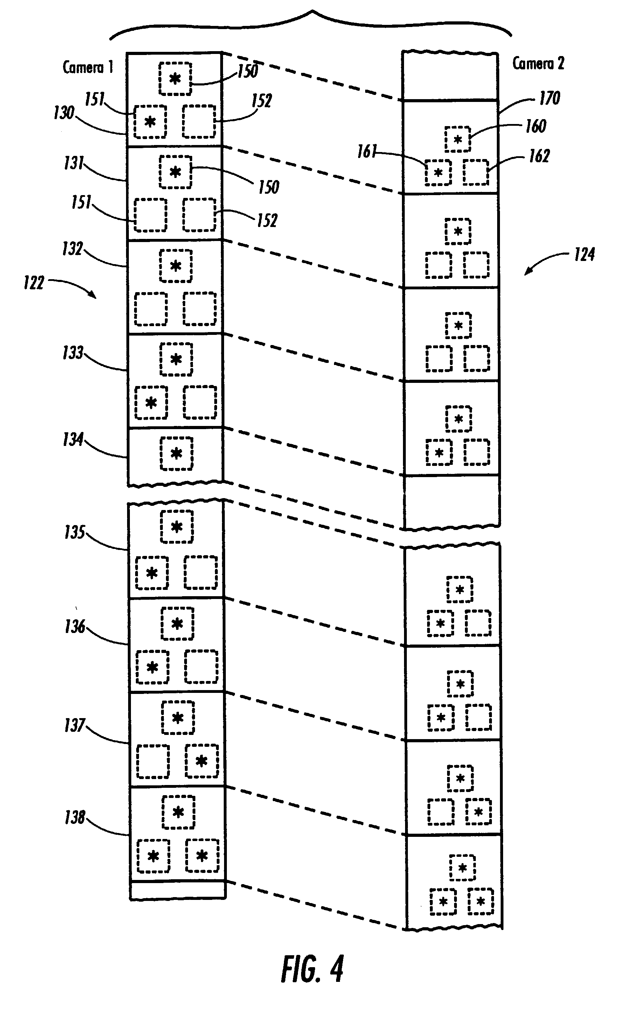

Various information transmission and signaling schemes are suitable for use in the present invention. One preferred scheme, indicated with particular reference to Figures 3 and 4, can be employed by reflective tag (laser pointer 49), an active infrared tag 50, or passive infrared tag 51, as desired. Figure 3 is a graph illustrating IR pulse detection versus time, with three distinct modes of pulsed operation shown. Operation of a tag 50 or 51 in locating or initialization mode is represented by a series of detected periodic infrared pulses 104 identified by bracket 106. To conserve power, these pulses 104 may actually consist of multiple brief infrared spikes or pulses, at a rate high enough to ensure apparently continuous detection of an infrared signal by the cameras throughout each pulse 104. Of course, IR intensity can be continuously maintained, rather than pulsed, for the duration of each pulse 104 if power is not limited.

The periodic detected infrared pulses 104 allow for detection of the three dimensional location of a tagged region or object (e.g. room walls or books 55) by cameras 25 and determination of pulse separation 103 between sequential pulses 104. As will be appreciated, to prevent aliasing errors and accurately determined pulse separation, cameras 25 are operated at a frame rate 102 substantially faster than pulse separation 103, with a frame rate two to three times as fast as pulse separation being suggested.

After a brief time (less than a second) periodic blinking is stopped, and transfer of identification information and data commences. Data transfer through blinking of tags 50 or 51 is identified by bracket 108. Absence of a pulse 104 is interpreted as a binary "0", while presence of a pulse 104 is interpreted as a binary "1". As will be appreciated, this allows for information encoding through any number of binary encoding schemes. For best results, use of one or more of the many available error correcting codes are preferred. After identification information and data is sent (after possible multiple resendings), the infrared pulses 104 from tags 50 or 51 can be stopped as indicated by bracket 110 to conserve power. The tags can of course be reactivated at predetermined times, random times, or in response to activation signals as desired.

Detection by cameras 25 of infrared pulses to allow for spatial localization and information transfer is schematically indicated in Figure 4. Two sequences of processed image frames 122 (camera 1) and 124 (camera 2) are illustrated. The cameras have a partially overlapping field of view with three potential infrared pulse sources. Each frame in the sequences 122 and 124 are composite images of several frames, with noninfrared background visual information subtracted to isolate the infrared pulses.

In frame 130 of camera 1, potential positions 150, 151, and 152 of infrared pulses (represented by an asterisk) are indicated by dotted outline. These positions correspond to potential positions 160, 161, and 162 in frame 170 of a differently positioned camera 2. Using image processing techniques such as previously described, the infrared pulses are isolated in frames 122 and 124 of camera 1 and camera 2 and used as reference points. Two dimensional information from each camera is acquired, and merged with calibration information to derive the three dimensional position of the infrared pulse.

The three distinct modes of pulsed operation are shown in the frames 122 and 124 Operation of an infrared tag 50 or 51 in locating or initialization mode is represented by periodic infrared pulses at position 150. With each composite and image processed frame 130-138 representing a single pulse separation (corresponding to pulse separation 103 of Figure 3), an infrared pulse is seen at position 150 in each frame 130-138 of frame sequence 122. A corresponding infrared pulse is of course also seen at position 160 in frame sequence 124 for camera 2. This is equivalent to the series of periodic infrared pulses 104 identified by bracket 106 in Figure 3.

Information transfer from another infrared tag is shown through aperiodic blinking of infrared pulses at position 151 in frames 130-138 of frame sequence 122 (and the corresponding position 161 in frame sequence 124). Absence of an infrared pulse in a frame is interpreted as a binary "0" (e.g. frames 131, 132, and 137), while presence of an infrared pulse is interpreted as a binary "1" (e.g. frames 130, 133, 135, 136, 138). Accordingly, as illustrated in Figure 4, the binary sequence "1001 ... 1101" can be determined. This binary sequence can be header information, data, identification, packet control information, error correction information, or any other necessary information that might be transmitted from tags 50 or 51.

As previously noted, after appropriate identification information and data is sent, the infrared pulses can be stopped to conserve power. The tags can of course be reactivated to again identify location of tags and transfer identification information and other data. In Figure 4, this is illustrated by the pattern of infrared pulses at position 152 in frame sequence 122 (and the corresponding position 162 in frame sequence 124). To conserve power, no infrared pulses are emitted during a time period covering frames 130-136. In response to an activation signal, a periodic series of infrared pulses is emitted for localization and initialization purposes, as seen in frames 137 and 138.

In operation, the present system allows for tracking of multiple stationary objects (e.g. books 55 or desk 16 with tag 44) or multiple slow moving objects (e.g. a person having an attached tag, or a moving laptop computer 70 with attached tag 72 held by a person, or both). With high speed video cameras the present system can be modified to provide spatial localization and tracking of quickly moving objects such as a pen 75 with tags 76 and 77, enabling automated handwriting interpretation through tracking of pen motion. Advantageously, large numbers of objects can be tracked in parallel, without requiring use of sophisticated time or frequency multiplexing tracking technique.

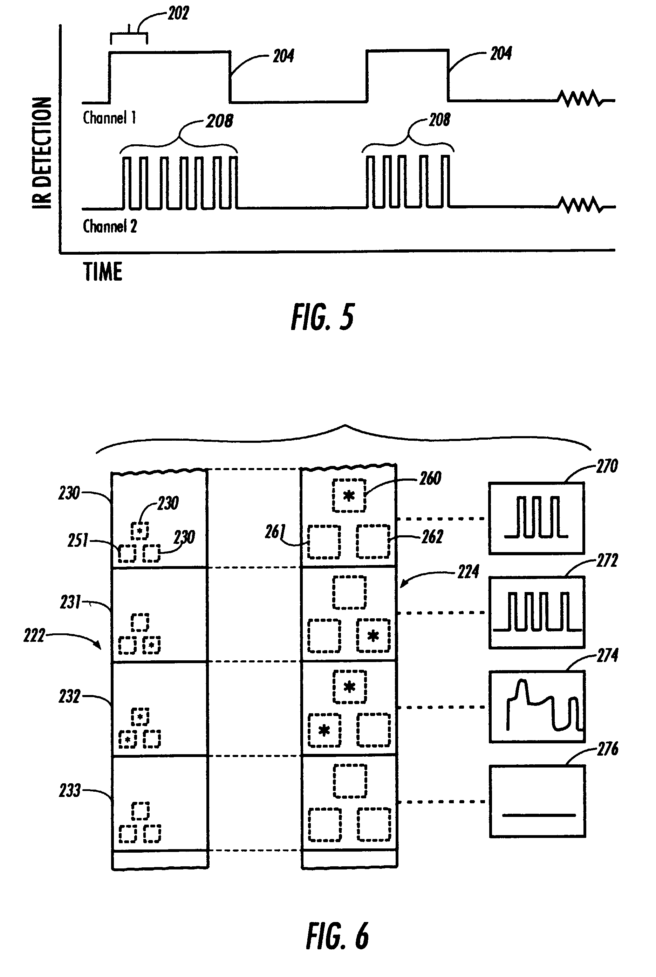

However, without the use of high speed cameras, the major limitation of the foregoing embodiment is its relatively low data transfer rate. Because bit transfer is closely associated with the frame rate of the cameras, the relatively low frame rate of widely available low cost cameras limits the theoretical data transfer rate to 10 or 20 bits per second. In practice, because of the necessary overhead associated with error control, bit transfer rates will be even lower. One possible way of overcoming this problem is the use of secondary high speed data communication channels for data transfer, while low data transfer rate infrared pulse/camera detection systems are used for spatial localization. One example of a dual communication channel system is illustrated in Figures 5 and 6.

Figure 5 is a graph illustrating IR pulse detection versus time for two separate infrared communication channels. Infrared pulses 204 of communication channel 1 are detected by cameras operating at a frame rate 202, using processes described in connection with Figures 3 and 4. A separate, higher speed infrared communication channel 2 with much shorter infrared pulses is detectable by a separate (non-camera based) infrared communication system. In preferred embodiments, infrared pulses in accordance with applicable IRDA (Infrared Data Association) standards can be used for data transfer on channel 2, although any high speed communication channel, including radio or optical messaging, can be used. In operation, the infrared pulses of channel 1 are used for spatial localization of an infrared tag, while a time coincident communication on channel 2 provides high speed data transfer. For example, in Figures 1 and 2, a high speed infrared communication system operating at about 19.2 kilobits per second includes an infrared tag 57 and a high speed infrared detector 64 attached to computer 60. Spatial localization is provided by cameras 25 detecting low speed infrared pulses, while any time coincident data received on the high speed channel is associated with a tag at the identified spatial location. Of course, use of time coincident communication results in a somewhat reduced data throughput due to statistically determinable data collisions (when two or more tags simultaneously transmit data, resulting in destructive data overlap), but is adequate for most situations.

Time coincident data transfer methods in accordance with the present invention can be better understood with reference to Figure 6. Two image processed frame sequences 222 and 224 taken from different cameras are illustrated, along with an example of high speed data (boxes 270, 272, 274, and 276) time coincidently received with the indicated frames. Data can be received from three separate tags located at three different spatial positions (positions 250, 251, and 252 frame sequence 222, positions 260, 261, and 262 in frame sequence 224). Using previously discussed techniques, an infrared pulse (denoted by an asterisk) can be positively located in three dimensions given the two dimensional frame sequences 222 and 224. If possible, the spatial location data is correlated with the high speed data to provide spatial localization of a specifically identified tag.

Figure 6 illustrates several possible outcomes for time coincident spatial localization methods in accordance with the present invention. Frame 230 shows a spatially localizable infrared pulse at position 250. Time coincident data 270 is attributed to a tag emitting the infrared pulse position at position 250, assuming there is no data collision. Data collision can occur when two or more data packets are simultaneously received, or when the spatially localizable infrared pulses overlap. Frame 231 illustrates one situation without data collision, with an infrared pulse at position 252 being correlated with identification data 272. However, if two or more tags are active during the same time period, as seen in frame 232, the received signal 274 is the garbled result of a data packet collision, and the signal is ignored. After preprogrammed random delays (seen in frame 233) or active requests to retransmit, the tags are again activated, with hopefully non-overlapping data transfer to allow for unique identification. Note that in certain cases of infrared pulse overlap, a data collision does not necessarily occur, and it may be possible to link spatial location and data through consideration of previously received infrared spatial locations.

While the present invention has been described in conjunction with specific embodiments thereof, it is evident that many alternatives, modifications, and variations will be apparent to those skilled in the art. Accordingly, the various embodiments described herein should be considered illustrative, and not limiting the scope of the present invention as defined in the following claims.

## Claims

1. A system for virtually modeling a physical system having immovable and movable objects, comprising:
at least two video cameras, each of the video cameras being configured to provide a sequence of images,
an image processing system configured to extract modulated infrared signals from the sequence of images and identify the spatial location of objects, and
a virtual reality modeling system for constructing a virtual reality model using identified object spatial location information.

2. The system of claim 1, wherein a spot of modulated infrared light is directed against a predetermined object to map its spatial location.

3. The system of claim 1 or 2, wherein an infrared tag is attached to an object, with data relating to the object encoded in the infrared tag.

4. A system for precisely locating a spot of light, comprising:
at least two video cameras, with each video camera configured to provide a sequence of images at a first frame rate,
a light pointer directing a series of identifying light signals at a second rate, less than the first frame rate, with a reflection of the identifying signals being perceptible by the video camera as a modulated light spot,
an image processing system configured to extract a three dimensional spatial location of the modulated light spot from the sequence of images.

5. The system of claim 4, wherein the identifying light signals are infrared light signals.

6. The system of claim 5, further comprising a scanning mechanism for automatically providing a series of modulated light spots, with each light spot spatially separated from another and having a unique identifying light signal.

7. A system for precisely locating positions of reflective surfaces, comprising:
at least two video cameras, each video camera providing a sequence of images,
a light pointer for directing a series of identifying light signals at a reflective surface, a reflection of the identifying signals being perceptible by the video camera as a modulated light spot, and
an image processing system configured to extract a three dimensional spatial location of the modulated light spot from the sequence of images derived from two or more cameras.

8. The system of claim 7, wherein the identifying light signals are infrared light signals.
